# FASCICULE DE BREVET EUROPEEN

(11) **EP 1 452 767 B1**
(45) Date de publication et mention de la délivrance du brevet: **30.08.2006**
(21) Numéro de dépôt: 04290129.8
(22) Date de dépôt: 19.01.2004
(51) Int. Cl.: F16F 9/36, F16F 9/32

(54) **Guide-tige lubrifié et amortisseur comportant un tel guide-tige**
Geschmierte Kolbenstangenführung und Dämpfer mit solcher Führung
Lubricated guide for piston rod and damper comprising such a guide

(30) Priorité: 27.02.2003 FR 0302381
(43) Date de publication de la demande: 01.09.2004
(73) Titulaire: Delphi Technologies, Inc., Troy, MI 48007 (US)
(72) Inventeur: Larcanche, Dominique, 95420 Magny en Vexin (FR)
(74) Mandataire: Laget, Jean-Loup

(56) Documents cités:
- GB-A- 769 417
- PATENT ABSTRACTS OF JAPAN vol. 010, no. 171 (M-489), 17 juin 1986 (1986-06-17) & JP 61 021437 A (TAIHOU KOGYO KK), 30 janvier 1986 (1986-01-30)

## Description

La présente invention concerne un guide-tige lubrifié, ainsi qu'un appareil hydraulique, en particulier un amortisseur, comportant le guide-tige.

Le guide-tige de l'invention peut être utilisé dans de nombreux appareils hydrauliques, comme par exemple des vérins hydrauliques, des amortisseurs et, plus particulièrement, des amortisseurs monotube à fluide magnéto-rhéologique.

Dans les appareils hydrauliques de ce genre, où une tige de piston est animée d'un mouvement fréquent de va-et-vient par rapport à un corps tubulaire de l'appareil hydraulique, le guide-tige est un élément très important et sa construction doit être extrêmement soignée car il doit assurer à la fois un bon guidage de la tige de piston, avec des frottements très faibles, même en présence d'efforts transversaux appliqués à la tige de piston, une abrasion aussi faible que possible de la tige de piston, des joints d'étanchéité et du coussinet servant au guidage de la tige, et une bonne étanchéité, c'est-à-dire des fuites d'huile aussi faibles que possible, et cela sur une longue période d'utilisation de l'appareil hydraulique. Par exemple, la durée de vie d'un véhicule est définie par les constructeurs automobiles comme étant de trois ans ou 240 000 kilomètres (150 000 miles), et le guide-tige des amortisseurs du véhicule doit ne nécessiter aucune pièce de rechange, ni aucune maintenance pendant cette période de temps.

Les exigences indiquées ci-dessus sont difficiles à satisfaire, en particulier dans le cas des amortisseurs monotube à fluide magnéto-rhéologique, c'est-à-dire des amortisseurs qui utilisent pour leur fonctionnement une huile synthétique contenant une charge de particules de fer. Dans ces amortisseurs, le piston ne comporte aucun clapet mobile pour contrôler le débit d'huile dans le ou les canaux internes du piston qui mettent en relation les deux chambres à huile situées respectivement de part et d'autre du piston dans le corps tubulaire de l'amortisseur. Au lieu de cela, le piston contient une bobine pouvant être alimentée en courant électrique par des conducteurs électriques passant dans la tige de piston, qui est creuse, afin d'engendrer un champ magnétique dont les lignes de flux traversent le ou les canaux internes du piston. Quand la bobine n'est pas alimentée en courant, l'huile chargée de particules de fer peut circuler librement dans le ou lesdits canaux internes du piston. Par contre, quand la bobine est alimentée en courant, les particules de fer contenues dans l'huile s'orientent transversalement dans le ou les canaux internes du piston, là où ceux-ci sont traversés par le flux magnétique engendré par la bobine, créant ainsi des barrières qui s'opposent ou tout au moins freinent fortement la circulation de l'huile entre les deux chambres situées de part et d'autre du piston.

Du fait de la présence des particules de fer en suspension dans l'huile, celle-ci est extrêmement abrasive, même si l'on choisit des particules de fer ayant une forme approximativement sphérique. Il en résulte que les divers joints d'étanchéité dynamique, en contact avec la tige de piston, doivent être conçus pour être résistants à l'abrasion.

Cependant, lorsque, en service, le piston se déplace en va-et-vient dans le corps tubulaire de l'amortisseur, les frottements internes dus à la présence des particules de fer en suspension dans l'huile passant dans les canaux étroits du piston sont convertis en chaleur. Il en résulte que l'amortisseur peut être porté à des températures supérieures à 100°C, typiquement 130°C en régime continu, voire à des températures atteignant et pouvant même dépasser 160°C si l'amortisseur est très fortement sollicité, par exemple lorsque le véhicule roule sur une route défoncée ou sur un terrain inégal. Dans ces conditions, le polyuréthanne, qui présente une bonne résistance à l'abrasion, mais qui ne résiste pas à des températures supérieures à 100°C, ne peut pas être utilisé dans la fabrication des joints d'étanchéité de l'amortisseur.

Du document EB-A-769 417 on connaît déjà un guide-tige lubrifié avec filtre entre les tubes d'un amortisseur bitube conventionnel.

Du document Research Disclosure Journal, U.K, Mars 2002, RD 455042 on connaît aussi un guide-tige lubrifié pour amortisseur monotube à fluide magnéto-rhéologique, comprenant un corps de forme générale cylindrique avec une première face d'extrémité exposée, en service, à une huile sous pression, une seconde face d'extrémité exposée à une pression relativement basse et un passage axial s'étendant de la première à la seconde face d'extrémité pour recevoir une tige à guider, un joint d'étanchéité primaire disposé à une extrémité côté haute pression du passage axial, un joint d'étanchéité secondaire disposé à une extrémité côté basse pression du passage axial, un coussinet disposé dans le passage axial entre les joints d'étanchéité primaire et secondaire, et une chambre annulaire située entre le coussinet et le joint d'étanchéité secondaire pour recevoir et contenir un fluide lubrifiant.

Dans ce guide-tige connu, le corps est en deux parties, à savoir une première partie qui porte le joint d'étanchéité secondaire, et une seconde partie qui porte le joint d'étanchéité primaire et le coussinet. La première partie du corps du guide-tige est destinée à être fixée rigidement au corps tubulaire de l'amortisseur. La deuxième partie du corps du guide-tige est montée axialement coulissante soit directement dans le corps tubulaire de l'amortisseur, soit dans la première partie du corps du guide-tige si cette première partie est en forme de cloche, de telle façon que, dans les deux cas, la seconde partie du corps du guide-tige soit flottante par rapport à la première partie. La chambre annulaire destinée à recevoir le fluide lubrifiant est aménagée entre les deux parties du corps du guide-tige. Cette chambre annulaire est remplie d'une huile propre, sans charge de particules de fer ou autres particules abrasives, c'est-à-dire d'une huile différente du fluide magnéto-rhéologique contenu dans la chambre de travail du corps tubulaire de l'amortisseur.

Dans ces conditions, étant donné que la chambre annulaire est remplie d'une huile propre, le joint d'étanchéité secondaire n'a pas besoin d'être optimisé pour résister à l'abrasion. Le joint d'étanchéité secondaire peut donc être sélectionné entièrement sur la base des frottements et du pouvoir d'étanchéification sur une large gamme de températures. L'huile propre contenue dans la chambre annulaire peut être optimisée de façon à présenter une faible volatilité et un bon pouvoir d'étanchéification. Comme la seconde partie du corps du guide-tige est flottante, les pressions s'équilibrent de part et d'autre de cette seconde partie. Si l'on prévoit des ressorts précontraints qui repoussent la seconde partie flottante vers la première partie du corps du guide-tige, il est même possible de faire en sorte que la pression dans la chambre annulaire contenant l'huile propre soit plus grande que la pression dans la chambre de travail de l'amortisseur. Il en résulte une différence de pression qui s'oppose à la tendance des particules abrasives (particules de fer) à passer entre la tige de piston et le joint d'étanchéité primaire. Dans ces conditions, l'endurance du joint d'étanchéité primaire est grandement améliorée.

Toutefois, le guide-tige connu décrit ci-dessus présente quelques inconvénients.
1) Deux systèmes distincts d'alimentation en huile doivent nécessairement être utilisés pour remplir d'une part la chambre de travail de l'amortisseur avec le fluide magnéto-rhéologique et d'autre part la chambre annulaire du guide-tige avec l'huile propre de lubrification. Ceci accroît le coût du matériel nécessaire pour assembler les éléments constitutifs de l'amortisseur, mais aussi complique les opérations d'assemblage.
2) La durée de vie de l'amortisseur est liée au volume d'huile propre contenue dans la chambre annulaire du guide-tige. Or, étant donné que la seconde partie du corps du guide-tige est flottante, il peut arriver, au cours des manutentions du guide-tige et/ou des opérations d'assemblage des éléments constitutifs de l'amortisseur, que la seconde partie du guide-tige soit déplacée par inadvertance dans un sens tendant à réduire le volume de la chambre annulaire avant le remplissage de celle-ci avec de l'huile propre. Il est clair que cela va entraîner une réduction de la durée de vie de l'amortisseur. Même si la personne chargée de l'assemblage des éléments constitutifs de l'amortisseur s'aperçoit que la partie flottante du corps du guide-tige n'occupe pas une bonne position, c'est-à-dire une position écartée au maximum de l'autre partie du corps du guide-tige, il est extrêmement difficile de replacer la partie flottante dans la bonne position après que les deux parties du corps du guide-tige ont été assemblées.
3) Les constructeurs automobiles exigent usuellement un débattement vertical maximal constant pour les roues des véhicules. Ceci exige que la tige de piston des amortisseurs ait une course maximale constante par rapport au corps tubulaire de l'amortisseur, ou vice versa. Cette exigence ne peut pas être satisfaite avec un guide-tige dont le corps comporte une partie flottante, car celle-ci ne peut pas servir de butée pour limiter la course de la tige de piston ou du corps tubulaire de l'amortisseur l'un par rapport à l'autre.
4) On ne peut éviter que, en fonctionnement, la tige de piston de l'amortisseur entraîne avec elle, chaque fois qu'elle sort du corps tubulaire de l'amortisseur, un film mince d'huile de lubrification qui s'évapore au moins en partie à l'extérieur du corps de l'amortisseur. La quantité d'huile évaporée est certes faible mais, à la longue, elle finit par provoquer une diminution du volume de la chambre annulaire du corps du guide-tige, donc un rapprochement mutuel des deux parties du corps du guide-tige et, par suite, un défaut de constance de la course maximale de la tige de piston ou du corps tubulaire de l'amortisseur l'un par rapport à l'autre.

La présente invention a donc pour but de fournir un guide-tige lubrifié du type défini plus haut, dans lequel les inconvénients précités sont au moins en partie supprimés.

A cet effet, l'invention a pour objet un guide-tige lubrifié du type défini plus haut, caractérisé en ce qu'il comprend en outre des moyens formant passages de communication qui s'étendent de la première face d'extrémité du corps du guide-tige jusqu'à la chambre annulaire, et un filtre à huile disposé dans lesdits moyens formant passages de communication.

Dans ces conditions, il n'est plus nécessaire de remplir d'une part la chambre de travail de l'amortisseur et d'autre part la chambre annulaire du guide-tige avec des huiles différentes provenant de deux sources différentes. L'huile propre de lubrification du guide-tige est ici obtenue par filtrage de l'huile, en particulier du fluide magnéto-rhéologique, contenue dans la chambre de travail de l'amortisseur. Comme l'huile ou le fluide magnéto-rhéologique contenu dans la chambre de travail de l'amortisseur est usuellement pressurisé par un gaz contenu dans une chambre à gaz de l'amortisseur, non seulement le remplissage de la chambre annulaire du guide-tige peut s'effectuer automatiquement et sans système additionnel d'alimentation en huile lors de l'assemblage des éléments constitutifs de l'amortisseur comme on le verra en détail plus loin, mais aussi la chambre annulaire du guide-tige est continuellement re-remplie d'huile filtrée par le filtre, donc d'huile propre, pendant toute la durée d'utilisation de l'amortisseur. Ainsi, les opérations d'assemblage de l'amortisseur sont considérablement simplifiées et la durée de vie de l'amortisseur peut être prolongée.

De préférence, le corps est en deux parties qui sont assemblées axialement et fixées rigidement l'une à l'autre, et le filtre est disposé dans une chambre de filtre formée entre les deux parties du corps. Dans ces conditions, aucune des deux parties du guide-tige n'est flottante. En conséquence, le guide-tige peut être utilisé comme butée de fin de course et la tige de piston ou le corps tubulaire de l'amortisseur auront l'un par rapport à l'autre une course maximale constante.

Dans un mode de réalisation de l'invention, le filtre a avantageusement la forme d'une rondelle ou d'un anneau plat ayant un diamètre intérieur d plus grand que celui du passage axial et un diamètre extérieur D plus petit que celui du corps.

Dans ce cas, chacune des deux parties du corps comporte une rainure circulaire formée dans une surface plane qui est perpendiculaire à l'axe du corps et qui est orientée vers l'autre des deux parties du corps, de telle sorte que les rainures circulaires des deux parties du corps se font mutuellement face et forment ensemble la chambre de filtre quand les deux parties du corps sont assemblées. Une des rainures circulaires communique avec un espace attenant à la première face d'extrémité du corps par au moins un premier passage, et l'autre rainure circulaire communique par au moins un second passage avec la chambre annulaire contenant le fluide lubrifiant.

De préférence, le filtre en forme de rondelle et les rainures circulaires ont des diamètres intérieurs et des diamètres extérieurs tels que le filtre est pincé dans toute sa région périphérique intérieure entre les bords intérieurs des rainures circulaires et dans toute sa région périphérique extérieure entre les bords extérieurs des rainures circulaires quand les deux parties du corps sont assemblées et fixées l'une à l'autre.

De préférence, le filtre a une structure stratifiée formée de plusieurs couches en forme de rondelles.

Dans un mode de réalisation de l'invention, le filtre est apte à filtrer un fluide magnéto-rhéologique à base d'huile synthétique contenant des particules de fer d'une taille comprise entre environ 1 µ et environ 20 µ.

L'invention a également pour objet un amortisseur comportant un corps tubulaire cylindrique fermé aux deux extrémités, l'une des deux extrémités étant fermée par un guide-tige, un piston principal et un piston séparateur huile/gaz, qui sont montés coulissants dans le corps tubulaire, et une tige de piston qui est liée au piston principal et qui passe à travers le guide-tige en y étant guidée, caractérisé en ce que le guide-tige est un guide-tige présentant une ou plusieurs des caractéristiques indiquées ci-dessus.

Dans un mode de réalisation de l'invention, l'huile contenue dans le corps tubulaire est un fluide magnéto-rhéologique à base d'huile synthétique contenant des particules de fer.

D'autres caractéristiques et avantages de l'invention ressortiront mieux au cours de la description suivante d'un mode de réalisation de l'invention donné à titre d'exemple en faisant référence aux dessins annexés sur lesquels :
- la figure 1 est une vue en coupe longitudinale d'un amortisseur monotube comportant un guide-tige selon un mode de réalisation de l'invention ;
- la figure 2 est une vue en coupe longitudinale, montrant, à échelle agrandie, une extrémité du corps tubulaire de l'amortisseur de la figure 1, avec le guide-tige de la présente invention ;
- la figure 3 montre, en coupe transversale et à une échelle encore plus grande que celle de la figure 2, un filtre utilisable dans le guide-tige des figures 1 et 2.

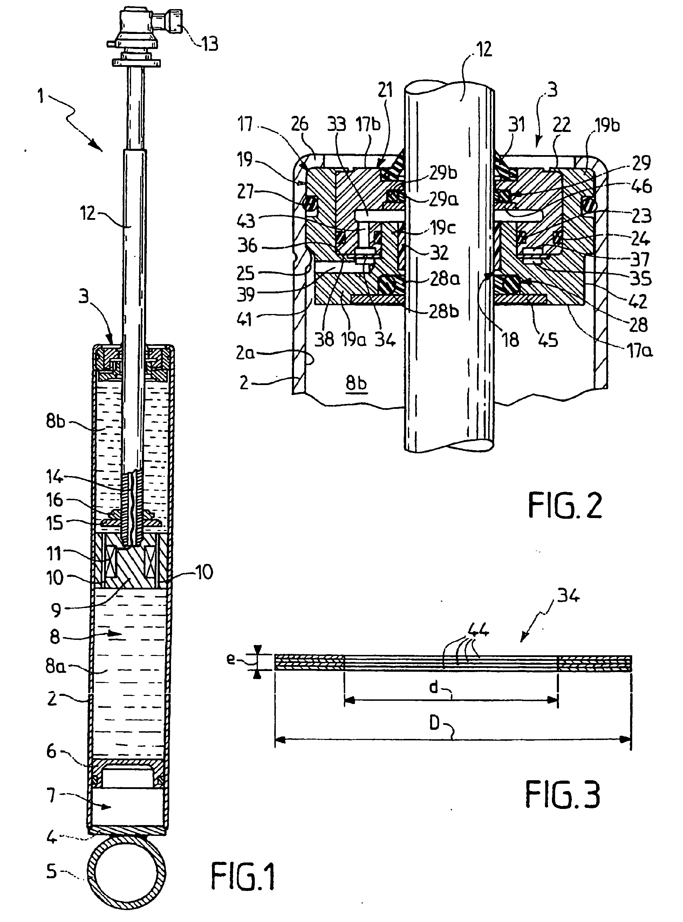

En se reportant tout d'abord à la figure 1, on peut voir un amortisseur monotube 1 comportant un corps tubulaire cylindrique 2 fermé à une extrémité par un guide-tige 3 qui sera décrit en détail plus loin, et, à l'extrémité opposée, par un élément obturateur 4 d'un type quelconque connu, par exemple un flasque d'extrémité qui est soudé au corps tubulaire 2. L'élément obturateur 4 peut être muni d'un anneau de fixation 5 permettant de fixer l'amortisseur 1 à un élément de suspension de roue, par exemple à un bras de suspension ou à un porte-moyeu.

L'amortisseur 1 comprend en outre un piston séparateur huile/gaz 6 qui est monté coulissant dans le corps tubulaire 2 et qui divise le volume intérieur de celui-ci en une chambre à gaz 7, qui est remplie d'air ou d'un gaz sous pression, et en une chambre à huile 8, qui peut être remplie d'une huile hydraulique ou, comme dans le mode de réalisation représenté sur la figure 1, d'un fluide magnéto-rhéologique. Typiquement, un fluide magnéto-rhéologique est constitué d'une huile synthétique contenant une charge d'environ 10 à 25 % en volume de particules de fer. Typiquement, la taille des particules de fer est distribuée selon une courbe de Gauss, avec une taille de 8 à 14 microns à ± 2 écarts type et 1 à 18 microns à ± 3 écarts type. La forme des particules peut être sphérique ou aléatoire, c'est-à-dire en forme de patate (ni triangulaire, ni cubique, ni en forme de bâtonnet). Typiquement, la viscosité du fluide magnéto-rhéologique est comprise entre environ 20 et environ 65 centipoises à 40°C.

Un piston principal ou piston de travail 9 est aussi monté coulissant dans le corps tubulaire 2 de l'amortisseur 1 et divise la chambre à huile 8 de celui-ci en une première chambre 8a (chambre de compression) et en une seconde chambre 8b (chambre dite de rebond). Le piston 11, qui est représenté de manière très schématique dans la figure 1, comporte au moins un, de préférence plusieurs passages 10 de section relativement faible, qui mettent les deux chambres 8a et 8b en communication l'une avec l'autre.

A l'intérieur du piston 9 se trouve une bobine conductrice 11 qui, lorsqu'elle est alimentée en courant, produit un champ magnétique dont une partie des lignes de flux passe transversalement à travers les canaux 10, aux deux extrémités de ceux-ci. Le piston 9 est fixé à l'une des extrémités d'une tige de piston creuse 12, qui s'étend axialement dans la chambre 8b et qui est montée coulissante, de manière étanche aux liquides, dans le guide-tige 3. Typiquement, à son autre extrémité ou extrémité extérieure, la tige de piston 12 peut être fixée par l'intermédiaire d'une articulation élastique (non montrée) à un élément (également non montré) de la carrosserie d'un véhicule automobile, et elle porte, à cette extrémité, un connecteur électrique 13 relié à la bobine 11 par un conducteur 14 qui passe dans la tige de piston creuse 12.

Une butée 15 munie d'un tampon élastique 16 est fixée à la tige de piston 12 à proximité du piston 9. La butée 15 permet, en combinaison avec le guide-tige 3, de limiter la course de sortie de la tige de piston 12 et, par suite, l'extension maximale de l'amortisseur 1.

Le guide-tige 3 va maintenant être décrit en détail en faisant référence à la figure 2. Comme montré dans la figure 2, le guide-tige 3 comporte un corps 17, de forme générale cylindrique, comportant un passage axial 18 pour la tige de piston 12. Pour des raisons qui seront mieux comprises par la suite, le corps 17 du guide-tige 3 est réalisé en deux parties 19 et 21 qui sont assemblées axialement et fixées rigidement l'une à l'autre.

Par exemple, la partie 21 est emboîtée dans la partie 19 qui comporte une paroi de base 19a, une paroi cylindrique extérieure 19b et une paroi cylindrique intérieure 19c ayant une longueur axiale plus courte que celle de la paroi cylindrique extérieure 19b. Après emboîtement de la partie 21 dans la partie 19, les deux parties 19 et 21 du corps 17 du guide-tige 3 sont fixées l'une à l'autre par exemple par sertissage comme montré en 22.

En variante, les deux parties 19 et 21 pourraient être fixées l'une à l'autre par emboîtement à force ou encore par vissage.

Des joints d'étanchéité statique 23 et 24, par exemple des joints toriques en NBR (polymère acrylonytrile butadiène) assurent l'étanchéité entre la paroi cylindrique intérieure 19c de la partie 19 et la partie 21 et entre cette dernière et la paroi cylindrique extérieure 19b de la partie 19.

La partie 19 du corps 17 du guide-tige 3 est fixée au corps tubulaire 2. Par exemple, la partie 19 est immobilisée axialement entre au moins un élément 25 formant butée axiale et un collet annulaire 26 dirigé radialement vers l'intérieur. La butée axiale 25 est formée par déformation plastique de la paroi du corps tubulaire 2, par exemple par emboutissage de celle-ci en plusieurs points espacés angulairement sur la périphérie du corps 2, ou par roulage tout autour du corps 2. Le collet annulaire 26 est par exemple formé par sertissage après que le guide-tige 3 a été engagé dans le corps 2 jusqu'à ce qu'il vienne en butée contre la butée axiale 25.

Bien entendu, d'autres modes de fixation peuvent être envisagés pour fixer la partie 19 du corps 17 du guide-tige 3 au corps 2. Par exemple, la liaison entre partie 19 et le corps 2 peut être une liaison vissée ou une liaison par emboîtement à force.

Un autre joint d'étanchéité statique 27, par exemple un joint torique en NBR, est prévu entre le corps 2 et la partie 19 du corps 17 du guide-tige 3.

Un joint d'étanchéité dynamique primaire 28 est disposé à une extrémité côté haute pression du passage axial 18 du guide-tige 3, près de la face d'extrémité 17a du corps 17 du guide-tige 3 qui, en service, est exposée à l'huile sous pression contenue dans la chambre 8b du corps tubulaire 2 de l'amortisseur 1. Un joint d'étanchéité dynamique secondaire 29 est disposé à une extrémité côté basse pression du passage axial 18, à proximité de la face d'extrémité 17b du corps 17 du guide-tige 3 qui, en service, est exposée à une pression relativement basse, typiquement la pression atmosphérique. Un joint racleur 31, par exemple un joint à lèvre en HNBR (polymère acrylonitrile butadiène hydrogéné) peut aussi être disposé à proximité de la face d'extrémité 17b du corps 17 du guide-tige 3 comme montré dans la figure 2. Chacun des deux joints d'étanchéité dynamique 28 et 29 est de préférence constitué, de façon connue, par un anneau intérieur d'étanchéité 28a ou 29a, par exemple en PTFE (polytétrafluoroéthylène) qui est en contact avec la tige de piston 12, et par un anneau extérieur de serrage radial 28b ou 29b, par exemple en NBR ou en HNBR, qui entoure élastiquement l'anneau intérieur précité en le serrant radialement contre la tige de piston 12.

Un coussinet 32 est disposé dans le passage axial 18 du guide-tige 3 entre les joints primaire et secondaire d'étanchéité dynamique 28 et 29 pour assurer un guidage axial de la tige de piston 12 avec des frottements aussi faibles que possible, même lorsque ladite tige de piston est soumise à des efforts ayant une composante transversale. De préférence, le coussinet 32 est constitué par un manchon en acier, dont la surface cylindrique intérieure comporte un revêtement de base en cuivre, lui-même revêtu d'une peau en PTFE.

Le joint primaire d'étanchéité dynamique 28 et le coussinet 32 sont portés par la partie 19 du corps 17 du guide-tige 3, tandis que le joint secondaire d'étanchéité dynamique 29 et le joint racleur 31 sont portés par la partie 21 du corps 17. Une chambre annulaire 33 est formée entre les deux parties 19 et 21 du corps 17 du guide-tige 3, de façon à entourer la tige de piston 12 dans la région qui se trouve entre le coussinet 32 et le joint secondaire d'étanchéité dynamique 29. La chambre annulaire 33 est remplie d'un fluide lubrifiant d'une manière qui sera décrite plus loin et elle va servir de réserve de fluide lubrifiant pendant toute la durée de vie de l'amortisseur, pour lubrifier le coussinet 32. La chambre annulaire 33 a par exemple un volume d'environ 10 cm³.

Pour le remplissage de la chambre annulaire 33 avec de l'huile, ladite chambre 33 communique avec la chambre 8b du corps 2 de l'amortisseur 1 à travers une série de passages dans lesquels est disposé un filtre à huile 34 apte à arrêter les particules de fer mélangées à l'huile du fluide magnéto-rhéologique contenu dans la chambre 8b, de façon à obtenir une huile propre c'est-à-dire dépourvue autant que possible de particules abrasives de fer, dans la chambre annulaire 33.

Dans le mode de réalisation représenté sur la figure 2, une rainure circulaire 35 est formée dans la surface supérieure plane 36 de la paroi de fond 19a de la partie 19 du corps 17, qui est perpendiculaire à l'axe du passage axial 18 dudit corps. De même, une rainure circulaire 37 est formée dans la surface inférieure plane 38 de la partie 21 du corps 17 qui est perpendiculaire à l'axe du passage axial 18 et qui est tournée vers la surface supérieure plane 36 de la paroi de fond 19a. La rainure circulaire 35 communique par au moins un passage radial, de préférence plusieurs passages radiaux, tel que le passage 39 formé dans la partie 19 du corps 17, avec un passage annulaire 41 formé entre la surface cylindrique intérieure 2a du corps tubulaire 2 de l'amortisseur et une partie inférieure 42, de plus petit diamètre extérieur, de la paroi cylindrique extérieure 19b de la partie 19 du corps 17. Le passage annulaire 41 est en communication directe avec la chambre 8b du corps 2 de l'amortisseur. De même, la rainure circulaire 37 communique avec la chambre annulaire 33 précitée par au moins un passage, de préférence plusieurs passages, comme le passage 43 qui s'étend parallèlement à l'alésage axial 18.

Les deux rainures circulaires 35 et 37 sont disposées mutuellement en face l'une de l'autre et forment ensemble une chambre annulaire pour le filtre 34. Dans ces conditions, le filtre 34 a de préférence la forme d'une rondelle ou d'un anneau plat qui est pincée dans toute sa région périphérique intérieure entre les bords intérieurs des rainures circulaires 35 et 37 et dans toute sa région périphérique extérieure entre les bords extérieurs desdites rainures circulaires quand les deux parties 19 et 21 du corps 17 du guide-tige sont assemblées et fixées l'une à l'autre.

De préférence, le filtre 34 a une structure stratifiée, formée de plusieurs couches 44 en forme de rondelles. A titre d'exemple, dans le cas d'un amortisseur dont la tige de piston 12 a un diamètre extérieur de 12 mm, le filtre 34 en forme de rondelle peut avoir un diamètre intérieur d de 21,5 mm, un diamètre extérieur D de 32 mm et une épaisseur totale e comprise entre 1 et 3 mm.

Les résultats des tests des performances du filtre 34 décrit ci-dessus et les conditions de service sont indiqués respectivement dans les tableaux 1 et 2 ci-dessous.

**TABLEAU 1**

| TESTS | DESCRIPTION DU TEST | COMMENTAIRES |
|---|---|---|
| Test de surcharge en pression | . 35 Mpa pendant 15 minutes sur chacun des deux côtés du filtre | . Pas d'affaissement du filtre provoquant une déformation du système environnant et/ou un défaut de fonctionnement. |
| | | . Pas de perforation, ni d'extrusion du filtre. |
| Test d'endurance | . Durée et température : 420 heures à 90°C ± 10°C | . Pas de fuites |
| | . Pression de service : 4 ± 3 Mpa à 1Hz | . Pas de déformation de la structure du filtre. |
| Test de stockage/ vieillissement | . 40°C pendant 4 heures, puis 130°C pendant 24 heures avec un gradient de température transitoire de 1°C/min., cycliquement (10 fois) | . Pas de défaut concernant l'aptitude au filtrage. |
| Test de haute température | . Stockage pendant 96 heures à + 130°C, avec des pics de température à + 160°C pendant 15 minutes toutes les 10 heures, gradient de température transitoire : 1°C/min. | . Pas de défaut concernant l'aptitude au filtrage. |

**TABLEAU 2**

| CONDITIONS DE SERVICE | | COMMENTAIRES |
|---|---|---|
| Chute de pression | 5 Mpa max.. | . Pas d'affaissement du filtre provoquant une déformation du système environnant et/ou un défaut de fonctionnement. |
| | | . Pas de perforation, ni d'extrusion du filtre. |
| Pression de service | 4 ± 3 Mpa | |
| Température de service | -40°C à 130°C avec des pics à 160°C | . Pas de dégradation des performances |

Dans la figure 2, les éléments 45 et 46 sont des rondelles de retenue destinées à retenir respectivement les joints primaire et secondaire d'étanchéité dynamique 28 et 29 dans des logements respectivement formés dans les parties 19 et 21 du corps 17 du guide-tige 3.

Pour l'assemblage des éléments constitutifs de l'amortisseur 1 représenté dans la figure 1, on prépare un premier sous-ensemble comprenant le piston 9, la tige de piston 12 et le guide-tige 3 qui est monté coulissant sur la tige de piston 12, sans fluide lubrifiant dans la chambre annulaire 33. On prépare ensuite un deuxième sous-ensemble comprenant le corps tubulaire 2 et le piston séparateur 6 avec de l'air ou un gaz neutre dans la chambre à gaz 7. Ensuite, le piston 9 du premier sous-ensemble est introduit dans le corps tubulaire 2 jusqu'à ce qu'il vienne en contact avec le piston séparateur 6. Ensuite, un effort axial est exercé sur la tige de piston 12 pour repousser le piston séparateur 6 vers le fond du corps tubulaire 2 de manière à comprimer l'air ou le gaz contenu dans la chambre 7 à une pression légèrement plus grande que la pression qui doit régner en service dans la chambre 7 lorsque l'amortisseur 1 est au repos. Ensuite, la chambre 8 du corps tubulaire 2 est remplie de fluide magnéto-rhéologique jusqu'à un niveau prédéfini proche de l'extrémité supérieure du corps tubulaire 2. Ensuite, le guide-tige 3 est glissé le long de la tige de piston 12 et engagé dans l'extrémité supérieure du corps tubulaire 2 jusqu'à ce que le guide-tige 3 soit arrêté par la ou les butées 25. Ensuite, le collet 26 du corps tubulaire 2 est rabattu par sertissage afin de fixer le guide-tige 3 au corps tubulaire 2. Ensuite, l'effort axial qui était exercé sur la tige de piston 12 pour pousser le piston 9 et le piston séparateur 6 vers le bas et pour comprimer le gaz contenu dans la chambre à gaz 7 est supprimé. Il en résulte que sous l'effet de la pression du gaz contenu dans la chambre à gaz 7, le piston séparateur 6 repousse quelque peu le piston 9 vers le haut et chasse le fluide magnéto-rhéologique à travers le passage annulaire 41 et les passages radiaux 39 vers la rainure circulaire 35. De là, le fluide magnéto-rhéologique passe à travers le filtre 34 qui retient les particules abrasives de fer, en ne laissant passer que l'huile synthétique. En passant ensuite à travers la rainure circulaire 37 et les canaux longitudinaux 43, l'huile synthétique va remplir la chambre annulaire 33 d'une huile sensiblement dépourvue de particules abrasives de fer.

Ensuite, lorsque l'amortisseur 1 est en service, la chambre annulaire 33 va être constamment re-remplie d'huile propre selon un processus semblable à celui qui a été décrit ci-dessus, mais beaucoup plus lent, pour compenser les faibles pertes d'huile par évaporation ou autre phénomène.

Il va de soi que le mode de réalisation qui a été décrit ci-dessus a été donné à titre d'exemple purement indicatif et nullement limitatif, et que de nombreuses modifications peuvent être facilement apportées par l'homme de l'art sans pour autant sortir du cadre de l'invention.

C'est ainsi notamment que les deux parties 19 et 21 du corps 17 du guide-tige 3 pourraient être conçues de telle façon que ce soit la partie 21 qui est fixée rigidement au corps tubulaire 2, la partie 19 du corps 17 étant alors sensiblement limitée à la paroi de fond 19a et à la paroi cylindrique intérieure 19c (la paroi cylindrique extérieure 19b faisant ici partie intégrante de la partie 21 du corps 17).

En outre, bien que la présente invention ait été plus particulièrement décrite et illustrée à propos d'un guide-tige équipant un amortisseur monotube à fluide magnéto-rhéologique, le guide-tige de l'invention peut être également utilisé avec des amortisseurs classiques à huile hydraulique, voire dans d'autres appareils hydrauliques comme par exemple des vérins hydrauliques.

## Revendications

1. Guide-tige lubrifié comprenant un corps (17) de forme générale cylindrique avec une première face d'extrémité (17a) exposée, en service, à une huile sous pression, une seconde face d'extrémité (17b) exposée à une pression relativement basse et un passage axial (18) s'étendant de la première à la seconde face d'extrémité pour recevoir une tige (12) à guider, un joint d'étanchéité primaire (28) disposé à une extrémité côté haute pression du passage axial, un joint d'étanchéité secondaire (29) disposé à une extrémité côté basse pression du passage axial, un coussinet (32) disposé dans le passage axial entre les joints d'étanchéité primaire et secondaire, et une chambre annulaire (33) située entre le coussinet (32) et le joint d'étanchéité secondaire (29) pour recevoir et contenir un fluide lubrifiant, **caractérisé en ce qu'**il comprend en outre des moyens (35, 37, 39, 41, 43) formant passages de communication qui s'étendent de la première face d'extrémité (17a) du corps (17) du guide-tige (3) jusqu'à la chambre annulaire (33), et un filtre à huile (34) disposé dans lesdits moyens (35, 37, 39, 41, 43) formant passages de communication.

2. Guide-tige selon la revendication 1, **caractérisé en ce que** le corps (17) est en deux parties (19 et 21) qui sont assemblées axialement et fixées rigidement l'une à l'autre, et le filtre (34) est disposé dans une chambre de filtre (35, 37) formée entre les deux parties du corps (17).

3. Guide-tige selon la revendication 2, **caractérisé en ce que** le filtre (34) a la forme d'une rondelle ou d'un anneau plat ayant un diamètre intérieur d plus grand que celui du passage axial (18) et un diamètre extérieur D plus petit que celui du corps (17).

4. Guide-tige selon la revendication 3, **caractérisé en ce que** chacune des deux parties (19 et 21) du corps (17) comporte une rainure circulaire (35 ou 37) formée dans une surface plane (36 ou 38) qui est perpendiculaire à l'axe du corps (17) et qui est orientée vers l'autre des deux parties (19 et 21) du corps (17), de telle sorte que les rainures circulaires (35 et 37) des deux parties du corps se font mutuellement face et forment ensemble la chambre de filtre quand les deux parties (19 et 21) du corps (17) sont assemblées.

5. Guide-tige selon la revendication 4, **caractérisé en ce qu'**une (35) des rainures circulaires (35 et 37) communique avec un espace (41) attenant à la première face d'extrémité (17a) du corps (17) par au moins un premier passage (39), et l'autre rainure circulaire (37) communique par au moins un second passage (43) avec la chambre annulaire (33) contenant le fluide lubrifiant.

6. Guide-tige selon la revendication 4 ou 5, **caractérisé en ce que** le filtre (34) en forme de rondelle et les rainures circulaires (35 et 37) ont des diamètres intérieurs et des diamètres extérieurs tels que le filtre (34) est pincé dans toute sa région périphérique intérieure entre les bords intérieurs des rainures circulaires (35 et 37) et dans toute sa région périphérique extérieure entre les bords extérieurs des rainures circulaires quand les deux parties (19 et 21) du corps (17) sont assemblées et fixées l'une à l'autre.

7. Guide-tige selon la revendication 3, **caractérisé en ce que** le filtre (34) a une structure stratifiée formée de plusieurs couches (44) en forme de rondelles.

8. Guide-tige selon l'une quelconque des revendications 1 à 7, **caractérisé en ce que** le filtre (34) est apte à filtrer un fluide magnéto-rhéologique à base d'huile synthétique contenant des particules de fer d'une taille comprise entre environ 1 µ et environ 20 µ.

9. Amortisseur comportant un corps tubulaire cylindrique (2) fermé aux deux extrémités, l'une des deux extrémités étant fermée par un guide-tige (3), un piston principal (9) et un piston séparateur huile/gaz (6), qui sont montés coulissants dans le corps tubulaire (2), et une tige de piston (12) qui est liée au piston principal (9) et qui passe à travers le guide-tige (3) en y étant guidée, **caractérisé en ce que** le guide-tige (3) est un guide-tige selon l'une quelconque des revendications 1 à 8.

10. Amortisseur selon la revendication 9, **caractérisé en ce que** l'huile contenue dans le corps tubulaire (2) est un fluide magnéto-rhéologique à base d'huile synthétique contenant des particules de fer.

## Claims

1. Lubricated rod guide comprising a body (17) of generally cylindrical form with a first end face (17a) exposed, in service, to a pressurized oil, a second end face (17b) exposed to a relatively low pressure and an axial passage (18) extending from the first to the second end face to receive a rod (12) to be guided, a primary seal (28) arranged at an end on the high pressure side of the axial passage, a secondary seal (29) arranged at an end on the low pressure side of the axial passage, a bearing (32) arranged in the axial passage between the primary and secondary seals, and an annular chamber (33) situated between the bearing (32) and the secondary seal (29) to receive and contain a lubricating fluid, **characterised by** the fact that it comprises in addition means (35, 37, 39, 41, 43) forming communication passages which extend from the first end face (17a) of the body (17) of the rod guide (3) to the annular chamber (33), and an oil filter (34) arranged in the said means (35, 37, 39, 41, 43) forming communication passages.

2. Rod guide as described in claim 1, **characterised by** the fact that the body (17) is in two parts (19 and 21) which are assembled axially and rigidly fixed to each other, and the filter (34) is arranged in a filter chamber (35, 37) formed between the two parts of the body (17).

3. Rod guide as described in claim 2, **characterised by** the fact that the filter (34) has the form of a washer or flat ring having an internal diameter d greater than that of the axial passage (18) and an external diameter D smaller than that of the body (17).

4. Rod guide as described in claim 3, **characterised by** the fact that each of the two parts (19 and 21) of the body (17) has a circular groove (35 or 37) formed in a flat surface (36 or 38) which is perpendicular to the axis of the body (17) and which is orientated towards the other of the two parts (19 and 21) of the body (17), so that the circular grooves (35 and 37) of the two parts of the body face each other and together form the filter chamber when the two parts (19 and 21) of the body (17) are assembled.

5. Rod guide as described in claim 4, **characterised by** the fact that one (35) of the circular grooves (35 and 37) communicates with a space (41) adjoining the first end face (17a) of the body (17) through at least a first passage (39), and the other circular groove (37) communicates through at least a second passage (43) with the annular chamber (33) containing the lubricating fluid.

6. Rod guide as described in claim 4 or 5, **characterised by** the fact that the filter (34) in the form of a washer and the circular grooves (35 and 37) have internal diameters and external diameters such that the filter (34) is nipped in its entire internal peripheral region between the inside edges of the circular grooves (35 and 37) and in its entire external peripheral region between the outside edges of the circular grooves when the two parts (19 and 21) of the body (17) are assembled and fixed to each other.

7. Rod guide as described in claim 3, **characterised by** the fact that the filter (34) has a stratified structure formed of a plurality of layers (44) in the form of washers.

8. Rod guide as described in any one of claims 1 to 7, **characterised by** the fact that the filter (34) is suitable to filter a magnetorheological fluid based on a synthetic oil containing iron particles having a size of between approximately 1 µ and approximately 20 µ.

9. Damper including a cylindrical tubular body (2) closed at its two ends, one of the two ends being closed by a rod guide (3), a main piston (9) and an oil/gas separation piston (6), which are mounted slidingly in the tubular body (2), and a piston rod (12) which is connected to the main piston (9) and which passes through the rod guide (3), being guided by it, **characterised by** the fact that the rod guide (3) is a rod guide as described in any one of claims 1 to 8.

10. Damper as described in claim 9, **characterised by** the fact that the oil contained in the tubular body (2) is a magnetorheological fluid based on synthetic oil containing iron particles.

## Patentansprüche

1. Geschmierte Stangenführung, die einen im Wesentlichen zylindrischen Körper (17) mit einer ersten Endfläche (17a), die im Betrieb einem unter Druck stehenden Öl ausgesetzt ist, einer zweiten Endfläche (17b), die einem relativ niedrigem Druck ausgesetzt ist, und einem Axialdurchlass (18) zur Aufnahme einer zu führenden Stange (12), welcher sich von der ersten zu der zweiten Endfläche erstreckt, eine Primärdichtung (28), die an einem hochdruckseitigen Ende des Axialdurchlasses angeordnet ist, eine Sekundärdichtung (29), die an einem niederdruckseitigen Ende des Axialdurchlasses angeordnet ist, ein in dem Axialdurchlass zwischen den Primär- und Sekundärdichtungen angeordnetes Achslager (32), und eine zwischen dem Achslager (32) und der Sekundärdichtung (29) angeordnete Ringkammer (33) zum Aufnahme und Fassung eines Schmierfluids umfasst, **dadurch gekennzeichnet, dass** sie außerdem kommunizierende Durchlässe bildende Mittel (35, 37, 39, 41, 43), die sich von der ersten Endfläche (17a) des Körpers (17) der Stangenführung (3) bis zu der Ringkammer (33) erstrecken, und einen in den kommunierende Durchlässe bildenden Mitteln (35, 37, 39, 41, 43) angeordneten Ölfilter (34) umfasst.

2. Stangenführung gemäß Anspruch 1, **dadurch gekennzeichnet, dass** der Körper (17) aus zwei Teilen (19 und 21) besteht, die axial zusammengebaut und starr aneinander befestigt sind, wobei der Filter (34) in einer zwischen den beiden Teilen des Körpers (17) gebildeten Filterkammer (35, 37) angeordnet ist.

3. Stangenführung gemäß Anspruch 2, **dadurch gekennzeichnet, dass** der Filter (34) die Form einer Scheibe oder eines flachen Rings mit einem größeren Innendurchmesser d als demjenigen des Axialdurchlasses (18) und einem kleineren Außendurchmesser (D) als demjenigen des Körpers (17) aufweist.

4. Stangenführung gemäß Anspruch 3, **dadurch gekennzeichnet, dass** jedes der beiden Teile (19 und 21) des Körpers (17) eine Ringnut (35 oder 37) aufweist, die in einer ebenen Fläche (36 oder 38) ausgebildet ist, welche senkrecht zur Achse des Körpers (17) verläuft und in Richtung des anderen der beiden Teile (19 und 21) des Körpers (17) orientiert ist, so dass die Ringnuten (35 und 37) der beiden Teile des Körpers einander gegenüberliegen und gemeinsam die Filterkammer bilden, wenn die beiden Teile (19 und 21) des Körpers (17) zusammengebaut sind.

5. Stangenführung gemäß Anspruch 4, **dadurch gekennzeichnet, dass** eine (35) der Ringnuten (35 und 37) über wenigstens einen ersten Durchlass (39) mit einem an die erste Endfläche (17a) des Körpers (17) angrenzenden Raum (41) kommuniziert, während die andere Ringnut (37) über wenigstens einen zweiten Durchlass (43) mit der das Schmierfluid enthaltenden Ringkammer (33) kommuniziert.

6. Stangenführung gemäß Anspruch 4 oder 5, **dadurch gekennzeichnet, dass** der scheibenförmige Filter (34) und die Ringnuten (35 und 37) solche Innen- und Außendurchmesser aufweisen, dass der Filter (34) in seinem gesamten inneren Umfangsbereich zwischen den lnnenrändern der ringförmigen Nuten (35 und 37) und in seinem gesamten äußeren Umfangsbereich zwischen den Außenrändern der ringförmigen Nuten eingeklemmt ist, wenn die beiden Teile (19 und 21) des Körpers (17) zusammengebaut und fixiert sind.

7. Stangenführung gemäß Anspruch 3, **dadurch gekennzeichnet, dass** der Filter (34) eine aus mehreren scheibenförmigen Lagen (44) gebildete Schichtstruktur aufweist.

8. Stangenführung gemäß einem der Ansprüche 1 bis 7, **dadurch gekennzeichnet, dass** der Filter (34) geeignet ist, ein magnetorheologisches Fluid auf der Basis eines Synthetiköls, welches Eisenpartikel mit einer Größe zwischen etwa 1 µm und etwa 20 µm enthält, zu filtern.

9. Dämpfer mit einem röhrenförmigen, zylindrischen Körper (2), der an beiden Enden verschlossen ist, wobei eines der beiden Enden durch eine Stangenführung (3) verschlossen ist, einem Hauptkolben (9) und einem Öl/Gas-Trennkolben (6), die verschiebbar in dem röhrenförmigen Körper (2) montiert sind, und einer Kolbenstange (12), die mit dem Hauptkolben (9) verbunden ist und die Stangenführung (3) durchquert, wobei sie von dieser geführt wird, **dadurch gekennzeichnet, dass** die Stangenführung (3) eine Stangenführung gemäß einem der Ansprüche 1 bis 8 ist.

10. Dämpfer gemäß Anspruch 9, **dadurch gekennzeichnet, dass** das in dem röhrenförmigen Körper (2) enthaltene ÖI ein magnetorheologisches Fluid auf der Basis eines Eisenpartikel enthaltenden Synthetiköls ist.
